# EUROPÄISCHE PATENTSCHRIFT

(11) **EP 0 951 627 B1**
(45) Veröffentlichungstag und Bekanntmachung des Hinweises auf die Patenterteilung: **20.06.2001**
(21) Anmeldenummer: 97943738.1
(22) Anmeldetag: 08.09.1997
(51) Int. Cl.: F21V 8/00

(54) **BELEUCHTUNGSEINHEIT**
LIGHTING UNIT
UNITE D'ECLAIRAGE

(30) Priorität: 09.01.1997 DE 19700472
(43) Veröffentlichungstag der Anmeldung: 27.10.1999
(73) Patentinhaber: ROBERT BOSCH GMBH, 70442 Stuttgart (DE)
(72) Erfinder: KNOLL, Peter, D-76275 Ettlingen (DE); HAAS, Gunther, D-71229 Leonberg (DE); WAGNER, Arndt, D-71229 Leonberg (DE)
(86) Internationale Anmeldenummer: DE9701983
(87) Internationale Veröffentlichungsnummer: WO9830835

(56) Entgegenhaltungen:
- EP-A- 0 751 340
- GB-A- 2 259 176
- US-A- 4 714 983
- US-A- 5 400 224

## Beschreibung

### Stand der Technik

Die Erfindung geht aus von einer Beleuchtungseinheit nach der Gattung des unabhängigen Anspruchs.

Nach dem Stand der Technik ist schon eine Beleuchtungseinheit zur flächigen Beleuchtung bekannt. Eine solche wird beispielsweise in der Flüssigkristallanzeige (LCD) der Firma Toshiba mit der Typbezeichnung TFD 50 W 30 eingesetzt. Die LCD weist einen Trägerrahmen auf, in welchem die verschiedenen Komponenten, wie beispielsweise die Flüssigkristallzelle, Lichtleiter der Beleuchtungseinheit, Lampe für die Beleuchtungseinheit, Reflektoren für die Beleuchtungseinheit, sowie die Ansteuerelektronik befestigt sind. Durch den aus vielen Einzelteilen bestehenden Aufbau ist ein erheblicher Arbeitsaufwand zur Montage des LCD notwendig. Ferner ist aus der US 5,400,224 eine Beleuchtungsplatte zur Hinterleuchtung einer Flüssigkristallanzeige bekannt, bei der die Platte in den Randbereichen Öffnungen für eine Lichtquelle aufweist, bei der auf die Platte eine lichtstreuende Folie aufgebracht ist und bei der der Bereich, in dem die Lichtquelle angeordnet ist, mit einer lichtundurchlässigen Bedeckung versehen ist. Zwischen den lichtundurchlässigen Bereichen ist die zu hinterleuchtende Flüssigkristallzelle angeordnet.

### Vorteile der Erfindung

Die erfindungsgemäße Anordnung mit den Merkmalen des Hauptanspruchs hat demgegenüber den Vorteil, daß die Montage des LCD deutlich weniger zeitaufwendig und daher preiswerter vonstatten gehen kann. Dies erfolgt unter anderem dadurch, dass in der Wellenleiterplatte weitere Mittel zur Halterung einer auf die Deckfläche aufzulegenden Platte insbesondere eines Polarisators, einer Prismenfolie oder eines Deckels vorgesehen sind. Dadurch dass die Mittel zur Halterung in einem ersten Bereich angeordnet sind und Licht in einen zweiten Bereich einkoppelbar ist und zwischen dem ersten Bereich und dem zweiten Bereich Mittel angeordnet sind, welche verhindern, dass Licht vom zweiten Bereich in den ersten Bereich übertragbar ist, wird das eingekoppelte Licht im Wesentlichen auf den zweiten Bereich eingeschränkt.

Als weiterer Vorteil ist anzusehen, daß auch die Stückkosten für die Bestandteile des LCD preiswerter fertigbar sind.

Schließlich ist es vorteilhaft, daß die erfindungsgemäße Beleuchtungseinheit einen modularen Aufbau der Flüssigkristallanzeige erlaubt, welcher leicht automatisierbar erscheint.

### Zeichnung

Ein Ausführungsbeispiel der Erfindung ist in der Zeichnung dargestellt und in der nachfolgenden Beschreibung näher erläutert. Es zeigen Figur 1 eine Vorderansicht einer Beleuchtungseinheit, Figur 2 eine Rückansicht einer Beleuchtungseinheit, Figur 3 eine Seitenansicht einer Beleuchtungseinheit, Figuren 4 und 5 Detailzeichnungen zur Lampenmontage einer Beleuchtungseinheit.

### Beschreibung

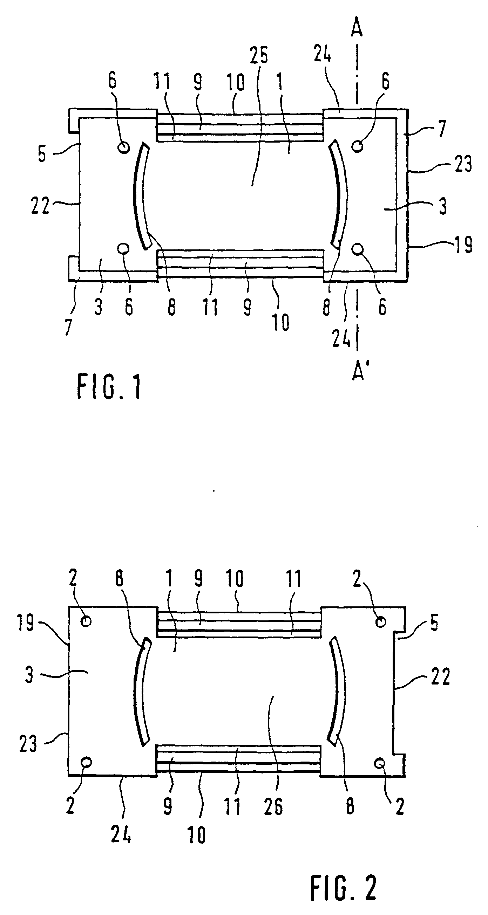

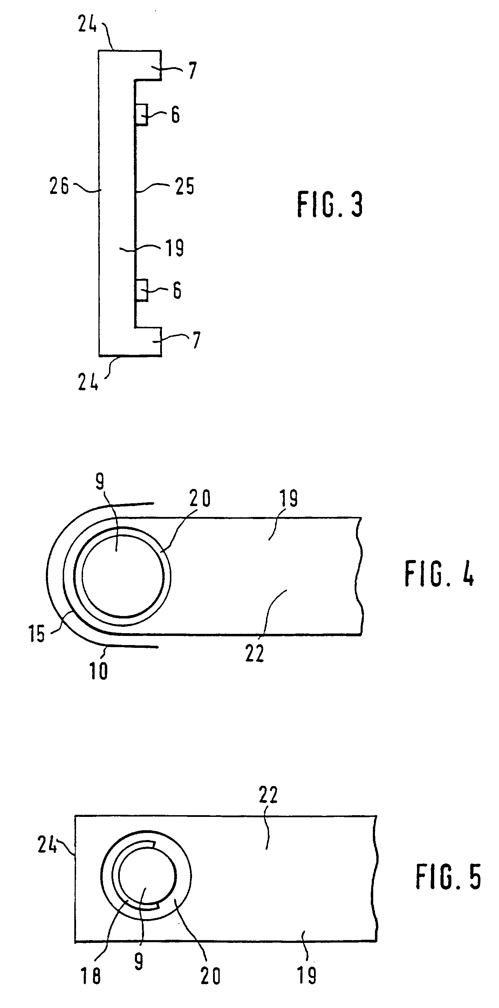

In Figur 1 ist die Vorderansicht einer erfindungsgemäßen Beleuchtungseinheit gezeigt. Die Beleuchtungseinheit weist eine Grundplatte 19 auf, welche aus transparentem oder leicht streuendem Material gefertigt ist. Die Grundform der Grundplatte 19 ist die eines flachen, rechteckigen Quaders, mit zwei kurzen Stirnseiten 22 und 23, zwei langen Stirnseiten 24 und zwei Deckflächen 25 und 26, wobei die erste Deckfläche 25 einen leicht erhöhten rundumlaufenden Rand aufweist, welcher als Halterahmen 7 ausgebildet ist. Die beiden langen Stirnseiten 24 weisen eine Vertiefung 11 mit rechteckigem Querschnitt auf, welche sich von der ersten Deckfläche 25 zur zweiten Deckfläche 26 erstreckt. Auf der ersten kurzen Stirnseite 22 ist eine Aussparung 5 vorgesehen, welche in Breite und Tiefe so dimensioniert ist, daß ein Kabel, Flachbandkabel oder Leiterbändchen durch die Aussparung 5 von der ersten Deckfläche 25 zur zweiten Deckfläche 26 geführt werden kann. Auf der ersten Deckfläche 26 ist in jeder der Ecken zwischen langer Stirnseite und kurzer Stirnseite ein Fixierungszapfen 6 geordnet, welcher als auf der ersten Deckfläche senkrecht stehender zylindrischer Körper ausgebildet ist. Längs der kurzen Stirnseiten 22 und 23 verlaufen zwei Schlitze 8, welche senkrecht auf den Deckflächen stehen und diese miteinander verbinden. Ihre Länge ist so gewählt, daß sie möglichst lang sind, jedoch nicht die langen Stirnseiten verbinden und nicht die strukturelle Stabilität der Grundplatte 19 gefährden. In jeder der beiden Vertiefungen 11 ist eine Lampe befestigt, wobei die Lampe eine länglich zylindrische Form aufweist, und ihre Längsachse parallel zur Längsachse der Grundplatte 19 verläuft. Ebenfalls in der Vertiefung 11, auf der Seite der Lampe 9, welche der Grundplatte 19 abgewandt ist, befindet sich ein Reflektor 10. Zwischen zwei der Vertiefungszapfen 6 ist eine Linie AA' eingezeichnet, welche die Schnittebene für die in Figur 3 dargestellte Schnittzeichnung definiert.

In Figur 2 ist die Rückansicht der in Figur 1 gezeigten Beleuchtungseinheit dargestellt, wobei gleiche Bezugszeichen gleiche Bestandteile kennzeichnen. Wiederum ist eine Grundplatte 19 mit einer rechteckigen Grundform gezeigt, wobei in der Rückansicht die zweite Deckfläche 26 sichtbar ist. In der ersten kurzen Stirnseite ist die Aussparung 5 sichtbar, die beiden Stirnseiten 24 weisen je eine Vertiefung 11 auf. In der Vertiefung 11 ist je eine Lampe 9 und ein Reflektor 10 befestigt. Zwischen gegenüberliegenden Ecken der Vertiefung 11 verlaufen die beiden Schlitze 8, welche schon in Figur 1 sichtbar waren. Durch die Schlitze 8 wird die Grundplatte 19 in eine Befestigungszone 3 und eine Wellenleiterzone 1 geteilt. Hierbei wird der Bereich der Grundplatte 19, welcher sich zwischen den beiden Schlitzen 8 befindet, als Wellenleiterzone 1 bezeichnet, während sich die Bezeichnung Befestigungszone 3 auf die restlichen Bereiche der Grundplatte 19 bezieht. In den Ecken der zweiten Deckfläche 26 weist die Zeichnung vier Befestigungsbohrungen 2 auf.

In Figur 3 ist ein Querschnitt durch die in Figuren 1 und 2 dargestellte Beleuchtungseinheit entlang der in der Figur 1 gezeigten Schnittlinie AA' dargestellt. Wiederum werden gleiche Bestandteile mit den gleichen Bezugszeichen bezeichnet. Die Grundplatte 19 verfügt über einen in etwa rechteckigen Querschnitt, wobei die erste Deckfläche 25, die zweite Deckfläche 26 und die beiden langen Stirnseiten 24 als Schnittlinien zu sehen sind. Am Rand der ersten Deckfläche 25 ist eine Erhebung, der Halterahmen, vorgesehen. Ebenfalls auf der ersten Deckfläche 25 sind zwei Fixierungszapfen 6 dargestellt. von der Lampe 9 abgestrahltes Licht wird nun entweder direkt in die Grundplatte 19 eingestrahlt oder mit Hilfe des Reflektors 10 in die Grundplatte 19 eingekoppelt. Das in die Grundplatte 19 eingekoppelte Licht wird an den Schnittflächen der Schlitze 8 reflektiert, welche zu diesem Zweck gegebenenfalls poliert oder mit einer Spiegelschicht versehen sein können. Weiterhin wird das Licht, welches sich in etwa parallel zu den Deckflächen ausbreitet, an diesen totalreflektiert. Durch diese Reflexionseffekte bleibt das Licht im wesentlichen auf die Wellenleiterzone 1 der Grundplatte 19 eingeschränkt. Teile des in der Wellenleiterzone 1 geführten Lichts wird nicht an der ersten Deckfläche 25 totalreflektiert, sondern abgestrahlt. So wird das Material für die Grundplatte 19 so ausgewählt, daß es in einem geringen Ausmaß lichtstreuend wirkt, ebenso sind jedoch auch andere physikalische Anordnungen, wie zum Beispiel das Strukturieren einer oder beider Deckflächen mit Prismen, wie es in der deutschen Patentanmeldung der Robert-Bosch GmbH R 31268 mit dem Aktenzeichen 1 96 52 209.9 (EP-A-0 944 799) offenbart wird, denkbar. Durch das Vorsehen der Vertiefungen 11 sind die Lampen 9 und die Reflektoren 10 in der selben Grundplatte 19 befestigbar, die auch die Wellenleiterzone 1 aufweist. Zum Bau einer Flüssigkristallanzeige unter Verwendung der erfindungsgemäßen Beleuchtungseinheit können auf die Deckfläche 25 die verschiedenen benötigten Filter in Folienform aufgelegt werden. Hierzu sollen die Folien eine in etwa rechteckige Form aufweisen, mit Abmessungen welche so gewählt sind, daß sie kleiner als die Innenabmessungen des Halterahmens 7 sind. Weiterhin ist vorgesehen, die Folien mit vier kreisförmigen Löchern zu versehen, welche so angeordnet sind, daß die Folien mit Hilfe der Fixierungszapfen 6 gelagert werden können. Auf die Fixierungszapfen 6, über die Folie, wird sodann eine Flüssigkristallzelle gelegt, welche im wesentlichen aus zwei Glasscheiben mit dem dazwischen befindlichen Flüssigkristall besteht. Die Außenabmessungen der Flüssigkristallzelle sind so gewählt, daß die Flüssigkristallzelle am Halterahmen 7 spielfrei und spannungsfrei gehalten wird. Üblicherweise weist eine Flüssigkristallzelle einen elektrischen Anschluß in Form eines biegsamen Bändchens mit aufgedruckten elektrischen Leitungen auf. Diese biegsame Bändchen kann durch die Aussparung 5 zur Rückseite geführt werden und dort auf die zweite Deckfläche 26 gefaltet werden. Auf der zweiten Deckfläche 26 kann mit Hilfe der Befestigungsbohrungen 2 eine Elektronikplatine und gegebenenfalls auch ein Rückseitendeckel befestigt werden.

Das in den Figuren 1 bis 3 gezeigte Ausführungsbeispiel kann leicht an andere Bauformen der Lampen 10, beispielsweise eine L- oder U-förmige Lampe, oder auch eine andere Anzahl von zylindrischen Lampen angepaßt werden. Insbesondere ist auch vorgesehen, nur auf einer langen Strinseite der Grundplatte 19 eine Vertiefung 11 vorzusehen und eine einzige stabförmige Lampe zu montieren. In diesem Fall ist auch vorteilhaft die der Lampe gegenüberliegende zweite lange Stirnseite zu verspiegeln.

Ebenso ist es auch denkbar und vorgesehen, daß zur Begrenzung der Wellenleiterzone 1 nicht auf relativ einfach zu produzierende Schlitze 8, sondern auf massive Spiegelelemente, insbesondere aus Metall oder metallischen Schichten, zurückgegriffen wird. Zu diesem Zweck ist es möglich, nach Produktion einer massiven Grundplatte 19 Schlitze in der Grundplatte 19 vorzusehen, in welche sodann ein Spiegel eingeführt und befestigt wird. Falls die Grundplatte 19 durch ein Gießverfahren hergestellt wird, beispielsweise Reaktionsguß, Spritzguß oder Druckguß, so ist es auch möglich, den Spiegel zuerst in die Gußform einzubringen und dann mit dem Material für die Grundplatte 19 zu umgießen.

Ferner ist es möglich, die Schlitze 8 durchgehend auszuführen. so daß sie zwei gegenüberliegende Vertiefungen 11 oder Stirnseiten miteinander verbinden. In diesem Falle ist es jedoch notwendig, daß die erste Deckfläche und die zweite Deckfläche nicht miteinander verbunden werden.

Es ist auch möglich und vorgesehen, die Tiefe der Schlitze 8 dort größer zu machen, wo der Schlitz weiter von der lampe entfernt ist, da somit das Licht in der Wellenleiterzone homogenisiert wird.

Eine besonders einfache Möglichkeit zur Montage der Lampe in der Grundplatte ist in Figur 4 dargestellt. Hierfür wird, ausgehend von einer kurzen Stirnseite, die Grundplatte 19 mit einer Bohrung 20 versehen, welche einen etwas größeren Durchmesser als den Außendurchmesser der Lampe 9 aufweist, und die parallel zur langen Stirnseite 24 und zur Oberfläche verläuft. In dieser Bohrung 20 wird die Lampe 9 gelagert. Zusätzlich kann nun die lange Stirnseite abgerundet werden, so daß sich statt einer langen Stirnseite die Verrundung 15 ergibt. Die Verrundung 15 kann dann idealerweise zum Auflegen eines Spiegels herangezogen werden.

Ebenso ist es auch möglich und vorgesehen, die in Figur 4 dargestellte Befestigung der Lampe zu wählen, ohne die Grundplatte 19 mit der Vertiefung 11 zu versehen. Wird in diesem Fall die lange Stirnseite auf ihrer vollen Länge durch die Verrundung ersetzt, so kann auch ein Spiegel 15 durch Bedampfen der Verrundung 15 mit einem reflektierenden Material realisiert werden.

Ein weiteres Ausführungsbeispiel ist in Figur 5 gezeigt. Figur 5 zeigt wiederum die Aufsicht auf eine erste kurze Stirnseite 22 einer Grundplatte 19. Ausgehend von der ersten kurzen Stirnseite 22 ist in die Grundplatte 19 eine Bohrung 20 eingebracht, welche in etwa senkrecht auf der ersten kurzen Stirnseite 22 steht und etwa parallel zur langen Stirnseite 24 verläuft. In die Bohrung 20 ist wiederum eine Lampe 9 eingeführt. Auf dem Lampenkörper der Lampe 9 ist eine Spiegelschicht 18 aufgebracht, welche beispielsweise aus aufgedampftem Metall besteht. Die Spiegelschicht 18 bedeckt etwa die Hälfte oder zwei Drittel der Mantelfläche der zylindrischen Form der Lampe 9, so daß Licht aus der Lampe nur in Richtung der Wellenleiterzone 1 der Rundplatte 19 austreten kann. Durch diese auf der Lampe 9 angebrachte Spiegelschicht 18 wird eine weitere Verringerung der zum Zusammenbau der Beleuchtungseinheit und einer darauf aufgebauten Flüssigkristallanzeige erreicht.

## Patentansprüche

1. Beleuchtungseinheit zur flächigen Beleuchtung mit einer Lichtquelle (9) und einer Wellenleiterplatte (19) aus transparentem oder leicht lichtstreuendem Material, wobei in der Wellenleiterplatte (19) Mittel zur Halterung (2, 6) zumindest einer auf eine Deckfläche aufzulegenden Platte oder Folie vorgesehen sind und wobei die Wellenleiterplatte einen ersten Bereich und einen zweiten Bereich aufweist, dadurch gekennzeichnet, daß die Mittel zur Halterung in dem ersten Bereich (3) angeordnet sind und in den zweiten Bereich (1) das von der Lichtquelle (9) abgestrahlte Licht einkoppelbar ist, und daß zwischen dem ersten Bereich und dem zweiten Bereich Mittel angeordnet sind, welche verhindern, daß Licht vom zweiten Bereich in den ersten Bereich übertragbar ist.

2. Beleuchtungseinheit nach Anspruch 1, dadurch gekennzeichnet, daß in der Wellenleiterplatte (19) Mittel zur Halterung einer über die Folie gelegten Flüssigkristallzelle vorgesehen sind.

3. Beleuchtungseinheit einem der vorhergehenden Ansprüche, dadurch gekennzeichnet, daß die Mittel zur Halterung Fixierungszapfen (2, 6) und ein Halterahmen (7) sind.

4. Beleuchtungseinheit nach einem der vorhergehenden Ansprüche, dadurch gekennzeichnet, daß die Mittel zur Verhinderung der Übertragung des Lichts als Schlitze (8) ausgebildet sind.

5. Beleuchtungseinheit nach Anspruch 4, dadurch gekennzeichnet, daß mit zunehmender Entfernung von der Lampe eine größere Tiefe der Schlitze vorgesehen ist.

6. Beleuchtungseinheit nach einem der Ansprüche 1-3, dadurch gekennzeichnet, daß die Mittel zur Verhinderung der Übertragung des Lichts als in die Wellenleiterplatte (19) integrierte Spiegel ausgebildet sind.

7. Beleuchtungseinheit nach einem der vorhergehenden Ansprüche, dadurch gekennzeichnet, daß die Folie ein Polarisator oder eine Prismenfolie ist, die direkt auf die Wellenleiterplatte (19) aufgelegt sind.

8. Beleuchtungseinheit nach einem der vorhergehenden Ansprüche, dadurch gekennzeichnet, daß die Lichtquelle (9) stabförmig ist.

9. Beleuchtungseinheit nach einem der vorhergehenden Ansprüche, dadurch gekennzeichnet, daß in der Wellenleiterplatte (19) Mittel zur Befestigung (20, 11) der Lichtquelle (9) vorgesehen sind.

10. Beleuchtungseinheit nach einem der vorhergehenden Ansprüche, dadurch gekennzeichnet, daß ein Reflektor (10) vorgesehen ist, welcher von der Lichtquelle erzeugtes Licht mittelbar oder unmittelbar in die Wellenleiterplatte lenkt, und daß in der Wellenleiterplatte Mittel zur Halterung (20, 11) des Reflektors (10) vorgesehen sind.

11. Beleuchtungseinheit nach einem nach einem der Ansprüche 1-9, dadurch gekennzeichnet, daß die Lichtquelle (9) auf ihrer der Wellenleiterplatte (19) abgewandten Seite mit einer reflektierenden Beschichtung versehen ist.

12. Beleuchtungseinheit nach einem der vorhergehenden Ansprüche, dadurch gekennzeichnet, daß die Wellenleiterplatte eine Bohrung aufweist, so daß die Lichtquelle von der Wellenleiterplatte umschlossen ist.

13. Beleuchtungseinheit nach einem der vorhergehenden Ansprüche, dadurch gekennzeichnet, daß an der Wellenleiterplatte eine zweite Lichtquelle auf einer der ersten Lichtquelle gegenüberliegenden Seite der Wellenleiterplatte angeordnet ist.

## Claims

1. Lighting unit for surface lighting having a light source (9) and a waveguide plate (19) made from a material which is transparent or scatters light slightly, there being provided in the waveguide plate (19) means for holding (2, 6) at least one plate or film to be laid on a covering surface, and the waveguide plate having a first region and a second region, characterized in that the means for holding are arranged in the first region (3), and the light emitted by the light source (9) can be launched into the second region (1), and in that there are arranged between the first region and the second region means which prevent the possibility of light being transmitted from the second region into the first region.

2. Lighting unit according to Claim 1, characterized in that means are provided in the waveguide plate (19) for holding a liquid crystal cell laid over the film.

3. Lighting unit according to one of the preceding claims, characterized in that the means for holding are fixing pins (2, 6) and a holding frame (7).

4. Lighting unit according to one of the preceding claims, characterized in that the means for preventing the transmission of the light are designed as slits (8).

5. Lighting unit according to Claim 4, characterized in that a greater depth of the slits is provided with increasing distance from the lamp.

6. Lighting unit according to one of Claims 1-3, characterized in that the means for preventing the transmission of the light are designed as mirrors integrated in the waveguide plate (19).

7. Lighting unit according to one of the preceding claims, characterized in that the film is a polarizer or a prismatic film which are laid directly on the waveguide plate (19).

8. Lighting unit according to one of the preceding claims, characterized in that the light source (9) is tubular.

9. Lighting unit according to one of the preceding claims, characterized in that means for fastening (20, 11) the light source (9) are provided in the waveguide plate (19).

10. Lighting unit according to one of the preceding claims, characterized in that a reflector (10) is provided which deflects light produced by the light source indirectly or directly into the waveguide plate, and in that means for holding (20, 11) the reflector (10) are provided in the waveguide plate.

11. Lighting unit according to one of Claims 1-9, characterized in that the light source (9) is provided with a reflecting coating on its side averted from the waveguide plate (19).

12. Lighting unit according to one of the preceding claims, characterized in that the waveguide plate has a bore such that the light source is surrounded by the waveguide plate.

13. Lighting unit according to one of the preceding claims, characterized in that a second light source is provided on the waveguide plate on a side of the waveguide plate opposite the first light source.

## Revendications

1. Unité d'éclairage pour fournir un éclairage plat, comprenant une source lumineuse (9) et une plaque guide d'ondes (19) faite d'un matériau transparent ou légèrement diffusant et équipée de moyens (2, 6) de fixation pour maintenir au moins une plaque ou une feuille appliquée sur une face de couverture, la plaque (19) présentant une première et une seconde zone,
caractérisée en ce que
les moyens de maintien sont situés dans la première zone (3) tandis que dans la seconde zone (1) peut être injectée la lumière émise par la source lumineuse (9), des moyens étant prévus entre la première et la seconde zone pour empêcher la lumière de passer de la seconde zone à la première.

2. Unité d'éclairage selon la revendication 1,
caractérisée en ce que
dans la plaque guide d'ondes (19) sont prévus des moyens pour maintenir une cellule à cristaux liquides posée sur la feuille.

3. Unité d'éclairage selon l'une quelconque des revendications précédentes,
caractérisée en ce que
les moyens de maintien sont des broches de fixation (2, 6) et un cadre de maintien (7).

4. Unité d'éclairage selon l'une quelconque des revendications précédentes,
caractérisée en ce que
les moyens destinés à empêcher le passage de la lumière ont la forme de fentes (8).

5. Unité d'éclairage selon la revendication 4,
caractérisée en ce que
la profondeur des fentes croît avec l'éloignement par rapport à la lampe.

6. Unité d'éclairage selon l'une quelconque des revendications 1 à 3,
caractérisée en ce que
les moyens destinés à empêcher le passage de la lumière ont la forme de miroirs intégrés dans la plaque guide d'ondes (19).

7. Unité d'éclairage selon l'une quelconque des revendications précédentes,
caractérisée en ce que
la feuille est un polarisateur ou une feuille à prismes déposée directement sur la plaque guide d'ondes (19).

8. Unité d'éclairage selon l'une quelconque des revendications précédentes,
caractérisée en ce que
la source lumineuse (9) a la forme d'une barre.

9. Unité d'éclairage selon l'une quelconque des revendications précédentes,
caractérisée en ce que
la plaque guide d'ondes (19) est équipée de moyens de fixation (20, 11) de la source lumineuse (9).

10. Unité d'éclairage selon l'une quelconque des revendications précédentes,
caractérisée en ce qu'
il est prévu un réflecteur qui dévie la lumière produite par la source lumineuse, directement ou indirectement dans la plaque guide d'ondes qui elle-même est équipée de moyens (20, 11) de fixation du réflecteur (10).

11. Unité d'éclairage selon l'une quelconque des revendications précédentes,
caractérisée en ce que
la source lumineuse (9), sur son côté éloigné de la plaque guide d'ondes (19), est garnie d'un revêtement réfléchissant.

12. Unité d'éclairage selon l'une quelconque des revendications précédentes,
caractérisée en ce que
la plaque guide d'ondes présente un alésage de sorte que la source lumineuse est enveloppée par la plaque guide d'ondes.

13. Unité d'éclairage selon l'une quelconque des revendications précédentes,
caractérisée en ce que
sur la plaque guide d'ondes est disposée une seconde source lumineuse, sur un des côtés de la plaque guide d'ondes opposé à la première source lumineuse.
